# EUROPÄISCHE PATENTSCHRIFT

(11) **EP 0 447 475 B1**
(45) Veröffentlichungstag und Bekanntmachung des Hinweises auf die Patenterteilung: **16.03.1994**
(21) Anmeldenummer: 90900852.6
(22) Anmeldetag: 07.12.1989
(51) Int. Cl.: G01N 21/84

(54) **OPTOELEKTRONISCHE FÜHLEINRICHTUNG**
OPTOELECTRONIC SENSING DEVICE
AGENCEMENT OPTOELECTRONIQUE DE DETECTION

(30) Priorität: 07.12.1988 SE 8804441; 08.12.1988 SE 8804442; 09.01.1989 SE 8900047
(43) Veröffentlichungstag der Anmeldung: 25.09.1991
(60) Teilanmeldung: 91109361.5
(73) Patentinhaber: IRO AB, S-523 01 Ulricehamn (SE)
(72) Erfinder: AKERLIND, Bo, S-125 42 Älvsjö (SE); HELLSTRÖM, Jerker, S-440 41 Nol (SE); FREDRIKSSON, Lars-Berno, S-511 57 Kinna (SE)
(74) Vertreter: Grünecker, Kinkeldey, Stockmair & Schwanhäusser Anwaltssozietät
(86) Internationale Anmeldenummer: EP8901501
(87) Internationale Veröffentlichungsnummer: WO9006504

(56) Entgegenhaltungen:
- EP-A- 0 162 134
- EP-A- 0 188 760
- EP-A- 0 271 728
- US-A- 3 853 408
- US-A- 4 300 599
- US-A- 4 378 161

## Beschreibung

Die Erfindung betrifft eine optoelektronische Fadenfühleinrichtung der im Oberbegriff des Patentanspruchs 1 angegebenen Art und eine Fadenspeicher- und -liefervorrichtung gemäß Anspruch 26.

Eine offenkundig vorbenutzte optoelektronische Fadenfühleinrichtung zum Feststellen des Fadendurchgangs in einem Ringspalt einer Fadenspeicher- und -liefervorrichtung enthält als Lichtquelle eine lichtemittierende Diode und als Empfänger eine Fotodiode oder einen Fototransistor. Eine der Empfängerfläche vorgesetzte Sammellinse bündelt parallele Strahlen und betrachtet einen zylindrischen und bis ins Unendliche reichenden Fühlbereich. Der fadenseitige Brennpunkt der Sammellinse liegt im Unendlichen. Der Empfänger ist auf einen Schwellwert eingestellt. Bei einer vorbestimmten Veränderung der Helligkeit auf der Empfängerfläche wird das Nutzsignal erzeugt, wobei das vom jeweiligen im Fühlbereich vorliegenden Objekt abgestrahlte, z.B. reflektierte, Licht gleichmäßig über die Empfängerfläche verteilt wird. Die Nutzsignale sind sehr schwach. Zu ihrer Weiterverarbeitung sind aufwendige steuerungstechnische Maßnahmen zur Verstärkung und Rauschunterdrückung erforderlich. Bei hohen Fadengeschwindigkeiten moderner Textilmaschinen sind diese Fühleinrichtungen nur beschränkt brauchbar. Sie leiden besonders unter Fremdlichteinwirkung und Verschmutzung. Ein gravierender Nachteil ist die Neigung zu Fehlsignalen aufgrund von Flusen oder Flusenbüscheln, weil nicht zwischen dem Faden und Verschmutzungen unterschieden wird, selbst wenn letztere Licht schwächer reflektieren als der Faden. Denn naheliegende kleinere oder fernliegende größere Verschmutzungen reflektieren genausoviel Licht wie der in korrekter Entfernung vorliegende Faden.

Bei einer aus der US-PS 34 01 267 bekannten optoelektronischen Fadenfühleinrichtung für die Kettfäden einer Webmaschine ist der zylindrische Fühlbereich so tief wie die Gewebebreite. Von einem Kettfaden oder von einer größeren Verschmutzung reflektiertes Licht wird von einer Sammellinse gebündelt und gleichmäßig auf der Empfängerfläche verteilt. Bei ausreichender Erhellung wird das Nutzsignal erzeugt.

Prinzipiell auf gleiche Weise arbeiten aus der US-A-43 00 599, der US-A-38 53 408 und der US-A-43 78 161 bekannte Fühleinrichtungen, bei denen das Nutzsignal beim Fadendurchgang nur aus Helligkeitsunterschieden auf der Empfängerfläche abgeleitet wird.

Die Schwäche des Nutzsignals und die Störungsanfälligkeit bei fremden Objekten resultieren bei diesen Fadenfühleinrichtungen aus dem Prinzip, einen sehr tiefen, praktisch bis ins Unendliche reichenden Fühlbereich zu betrachten und Helligkeitsänderungen auf der Empfängerfläche zur Signalerzeugung abzugreifen, wobei ein Schwellwert zugrundegelegt ist.

Mit einer aus EP-A3-0 188 760 bekannten Vorrichtung wird eine Gegenstandszeile, z.B. ein Strichcode, auf einer bewegten Materialbahn mittels einer Abbildungsoptik abgetastet und die in der Gegenstandszeile enthaltene Information ermittelt.

Gemäß EP-A3-0 162 134 werden fortlaufend flächige Streifen des Gewebes in einer Webmaschine auf Texturfehler mittels eines bewegten Tastkopfes abgetastet. Empfängerseitig ist eine für diesen Zweck geeignete Optik vorgesehen. Um eine Information aus jedem Streifen zu erhalten, wird der Leuchtstärkenwert auf einer Abtastzeile ausgewertet.

Bei einem aus EP-A2-0 271 728 bekannten Verfahren zur Messung und/oder Überwachung von Eigenschaften von Garnen wird mit einem Bildsensor das Momentan-Bild eines Garnabschnitts aufgenommen und umgesetzt, um die Stärke, die Unrundheit, die Drehung, die Verzwirnung, abstehende Fasern oder die Dehnung festzustellen. Es wird entweder das stillstehende Garn untersucht, bzw. werden bei dessen Bewegung in Längsrichtung eine Momentaufnahme oder mit einem Stroboskop eine Folge von Aufnahmen angefertigt und umgesetzt.

In den drei letztgenannten Fällen wird die aus dem Bild des vorhandenen Objekts entnehmbare Information ermittelt, die Anwesenheit des Objekts wird vorausgesetzt. Jedoch wird das Objekt nicht abgebildet, um ein Nutzsignal aus dem Durchgang oder der An- bzw. Abwesenheit des Objekts abzuleiten.

Der Erfindung liegt die Aufgabe zugrunde, eine optoelektronische Fadenfühleinrichtung einer Fadenspeicher- und -liefervorrichtung zu schaffen, mit der starke, eindeutige und störunfällige Nutzsignale erzeugbar sind.

Diese Aufgabe wird mit den Merkmalen der Patentansprüche 1 bzw. 26 gelöst.

Das auf der Empfängerfläche erzeugte scharfe Bild des Fadens ist markant und kontraststark und unterscheidet sich deutlich vom Bild bei Abwesenheit des Fadens. Dies führt bei der Auswertung zu einem starken Nutzsignal, das deutlich von dem Grundsignal bei Abwesenheit des Fadens abweicht. Da mit der Abbildungsoptik auf der Empfängerfläche Flusen im Fühlbereich, wie sie beim Arbeiten mit Fäden in einer Fadenspeicher- und -liefervorrichtung unvermeidlich sind, ein anderes Bild als der Faden ergeben, was bei der Auswertung berücksichtigt werden kann, kann zwischen dem Faden und Flusen unterschieden und die Abgabe eines "falschen" Nutzsignals unterdrückt werden. Da die Abbildungsoptik wegen der Tiefenschärfeeinstellung auf den Fühlbereich Flusen vor oder hinter dem Fühlbereich ignoriert, unterbleiben auch dann "falsche" Nutzsignale.

Vorteilhafte Ausführungsformen gehen aus den Unteransprüchen hervor.

Anhand der Zeichnung werden Ausführungsformen des Erfindungsgegenstandes erläutert. Es zeigen:
- Fig. 1: eine schematische Seitenansicht einer Fadenspeicher- und -liefervorrichtung mit Anwendungsfällen von optoelektronischen Fühleinrichtungen,
- Fig. 2: einen vergrößerten Schnitt einer Fühleinrichtung,
- Fig. 3: eine schematische Darstellung von Komponenten einer Fühleinrichtung mit einem Bildwandler,
- Fig. 4A,4B: zwei Arbeitsphasen der Fühleinrichtung von Fig. 2,
- Fig. 5: vier verschiedene Möglichkeiten a-d zur Ausgestaltung des Bildwandlers der Fühleinrichtung,
- Fig. 6: vier der Fig. 5 zugehörige Schemata zur Verdeutlichung der Funktion, und
- Fig. 7: schematisch eine andere Ausführungsform einer Fühleinrichtung.

Eine Fadenspeicher- und -liefervorrichtung 1 ist mit drei verschiedenen Fühleinrichtungen F für verschiedene Funktionen bestückt. Die Vorrichtung 1 enthält ein von einem Antrieb 2 getriebenes Aufwickelorgan 4, das einen durch den Antrieb 2 zulaufenden Faden 7 in Windungen zu einem Fadenvorrat 8 auf eine Speicherfläche 3 aufwickelt. Daraus wird der Faden 7 überkopf unter einem Ring 5 (Ringspalt 9) in Umfangsrichtung umlaufend und durch eine Fadenöse 6 abgezogen. Eine im Ring 5 angeordnete optoelektronische Fühleinrichtung F stellt den Durchgang des Fadens 7 bei jedem Umlauf fest und erzeugt Nutzsignale, die, beispielsweise, zum Berechnen der Länge des abgezogenen Fadens, seiner Geschwindigkeit oder zum Feststellen eines Fadenbruchs verarbeitet werden .

Die dem Aufwickelorgan 4 zugeordnete optoelektronische Fühleinrichtung F stellt berührungslos den ordnungsgemäßen Durchgang des Fadens 7 und die Geschwindigkeit des Aufwickelorgans 4 bzw. des Antriebs 2 fest. Auch wird ein Fadenbruch festgestellt, wenn das aus dem Durchgang des Fadens zu einem bestimmten Zeitpunkt erwartete Nutzsignal ausbleibt. Diese Fühleinrichtung überwacht entweder den aus dem Wickelorgan 4 austretenden Faden 7 bei seinen Passagen (auf einen Fadenbruch stromauf oder /und auf die Wickelgeschwindigkeit oder die Windungszahl) oder den Bereich zumindest der ersten Fadenwindung im Vorrat 8 (auf einen Fadenbruch stromauf). In beiden Fällen dient die Fühleinrichtung auch zur Feststellung der linearen Fadenbewegung.

Die dritte Fühleinrichtung F ist außerhalb der Speicherfläche 3 an einer Halterung stationär angebracht und auf den Fadenvorrat 8 ausgerichtet. Sie übewacht einen balkenförmigen Fühlbereich, in dem die Windungen als langgestrecktes Objekt, gegebenenfalls unterbrochen durch Zwischenräume, vorliegen. Lichtquellen 10 leuchten den Fühlbereich aus, damit die Fühleinrichtung F mittels eines Objektivs mit Sammellinse 11 eine Abbildung des Objekts auf einer sensitiven Empfängerfläche 12 herstellt. Ein Bildwandler 13 erzeugt unterschiedliche Nutzsignale aus der Abbildung, wie später erläutert wird. Diese drei Fühleinrichtungen F sind eine Auswahl aus einer Vielzahl von Möglichkeiten des Einsatzes solcher Fühleinrichtungen. Grundsätzlich sind diese Fühleinrichtungen zur Nutzsignalerzeugung unter genauerem Abtasten eines oder mehrerer Fäden oder Fadenteile brauchbar, und zwar für Textilmaschinen wie Webmaschinen, für diesen vorgesetzte Einrichtungen oder auch in der Textilmaschine selbst.

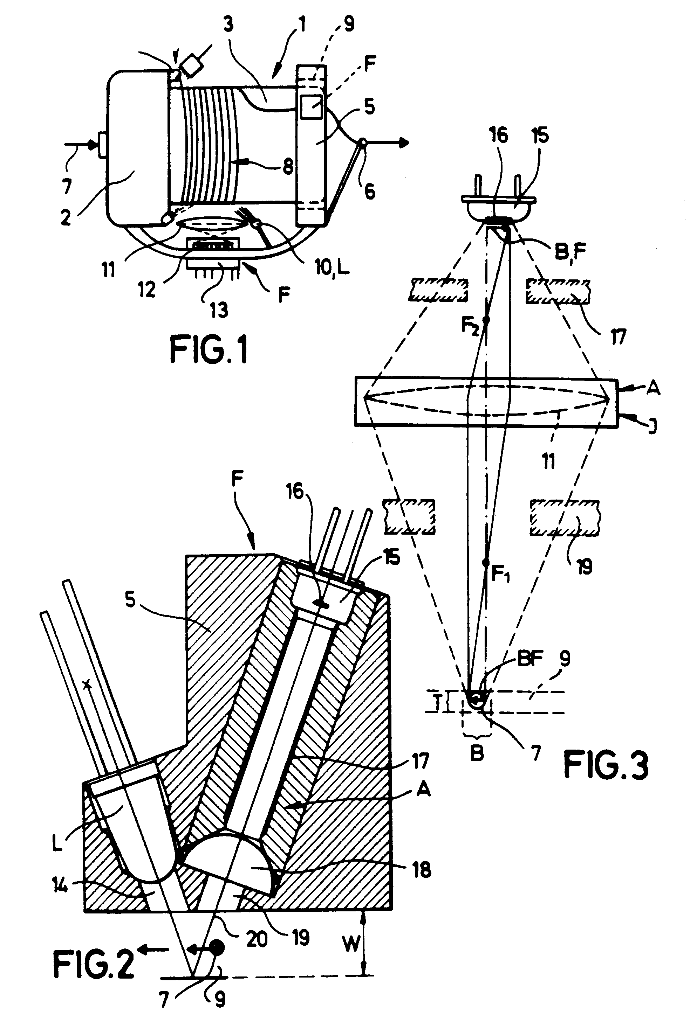

Fig. 2 ist ein Schnitt der Fühleinrichtung F im Ring 5. Als Lichtquelle L dient eine Fotodiode 10, die durch einen schrägen Kanal 14 in den Ringspalt 9 leuchtet, durch den der abgezogene Faden 7 quer hindurchgeht. Einund Ausfallswinkel sind jeweils ca. 20^{o}. Auf den beleuchteten Faden 7 ist ein Fotoelement 15, z.B. eine Fotodiode oder ein Fototransistor, mit einer Empfängerfläche 16 ausgerichtet, die am Ende eines als Blende ausgebildeten, ausgekleideten Rohres 7 liegt, an dessen anderem Ende eine Abbildungsoptik 18, z.B. eine Sammellinse, angeordnet ist. Die optische Achse 20 der Sammellinse ist auf die Empfängerfläche 16 und den Faden ausgerichtet. An der anderen Seite der Abbildungsoptik 18 ist als weitere Blende 19 ein, vorzugsweise lichtabsorbierend ausgekleideter Kanal, vorgesehen. Die Ringspaltweite W beträgt z.B. 5mm. Darauf ist die Tiefenschärfe der Abbildungsoptik 18 ausgelegt, die den außerdem in der Breite, z.B. auf die Breite des Fadens 7, begrenzten Fühlbereich betrachtet. Der Fühlbereich ist also optisch sowohl in der Tiefe als auch zumindest in der Breite exakt begrenzt.

Tritt der Faden 7 in den Fühlbereich ein, so stellt die Abbildungsoptik 18 vom Faden eine scharfe Abbildung auf der Empfängerfläche 16 her, die vom Fotoelement 15 zur Erzeugung eines Nutzsignals ausgewertet wird.

Gemäß Fig. 3 stellt ein die Abbildungsoptik A darstellendes Objektiv J die Abbildung BF' des Fadens 7, dargestellt durch einen das Objekt repäsentierenden Pfeil BF, auf der Empfängerfläche 16 her. Die objekt- und bildseitigen Brennpunkte F1, F2 des Objektives J, das hier wenigstens eine bikonvexe Sammellinse 11 enthält, liegen jeweils zwischen dem Objektiv J und der Empfängerfläche 16 und zwischen dem Objektiv J und dem Ringspalt 9. Das Objekt BF wird spiegelverkehrt und mit einer einstellbaren Vergrößerung oder Verkleinerung auf der Empfängerfläche 16 abgebildet und vom Fotoelement 15 zur Abgabe des Nutzsignals ausgewertet. Der Fühlbereich hat eine Breite B und eine Tiefe T, die höchstens der Tiefe des Ringspalts 9 entspricht. Die Blenden 19, 17 verbessern die Schärfe der Abbildung BF' und stellen die Tiefenschärfe im Fühlbereich ein. Die Blenden 19, 17 kompensieren Abbildungsfehler durch ggfs. verzerrende Randbereiche der Sammellinse 11.

Gemäß Fig. 4A deckt die scharfe Abbildung BF' nahezu die gesamte Empfängerfläche 16 ab. Nur die horizontal schraffierten Ecken liegen außerhalb der Ränder der Abbildung BF'. Das Fotoelement 15 ist als Bildwandler BW konzipiert oder mit einem Bildwandler BW kombiniert, der die Abbildung innerhalb ihrer Grenzen auswertet und ein Nutzsignal S1 erzeugt, z.B eine digitale 1. Das Nutzsignal 1 wird nur erzeugt, wenn der Bildwandler BW eine bestimmte Lichtintensität der Abbildung innerhalb der scharfen Grenzen feststellt, was durch die dichte Schraffierung des kleinen die Empfängerfläche 16 andeutenden Kästchens oberhalb von Fig. 4A angedeutet wird.

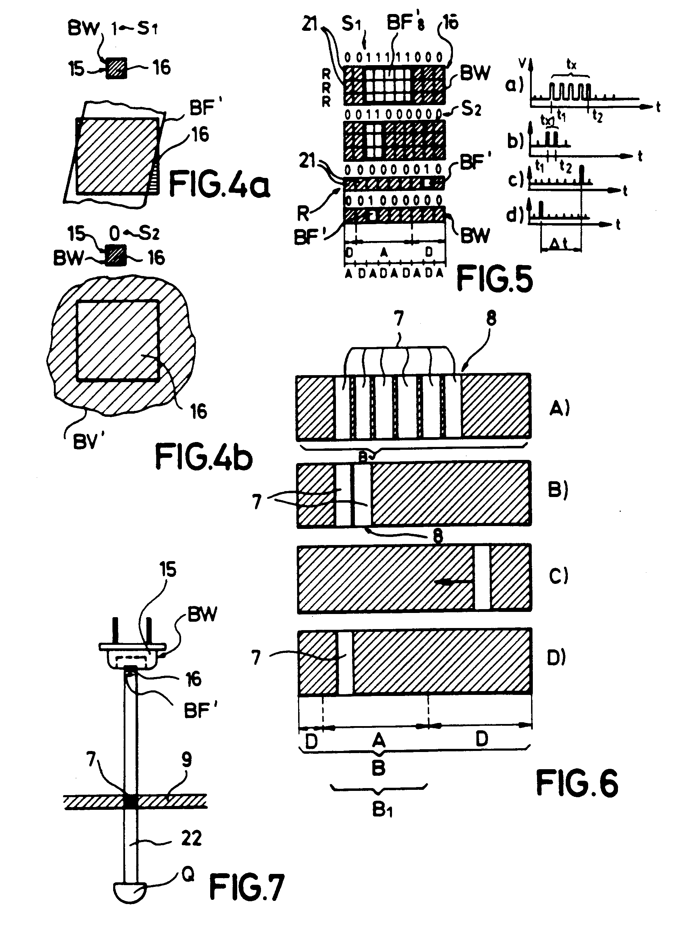

Tritt hingegen gemäß Fig. 4B ein Flusenbüschel in den Fühlbereich, dann ist dessen Abbildung BV' zwar größer als die Abbildung BF'. Wegen der größeren Lichtdurchlässigkeit des Flusenbüschels hat die Abbildung BV' auf der Empfängerfläche 16 eine geringere Helligkeit. Der Bildwandler stellt die geringere Helligkeit fest und erzeugt kein Nutzsignal, sondern ein Grundsignal S2 oder ein anderes Signal, z.B. eine digitale 0.

Der Bildwandler BW kann (s. Fig. 5) aus mehreren Fotoelementen in Reihen- oder Matrixform zusammengesetzt sein, um die Abbildung möglichst präzise auszuwerten. Gemäß Fig. 5 (a,b) ist die Empfängerfläche 16, die dem Bildwandler BW zugehört, als flächige Matrix (hier drei Reihen R1, R2, R3) einzelner abbildungssensitiver Lichtpunktelemente oder Pixel 21 ausgebildet, die an eine sequentiell (z.B. von links nach rechts) abtastende Steuerschaltung (nicht dargestellt) angeschlossen ist. In Fig. 5, a ist die Abbildung BF'₈ des Fadenvorrats 8 ein langgestrecktes Rechteck, zu dessen beiden Schmalseiten nicht beleuchtete Pixel vorliegen. Im zugehörigen, in Fig. 6, A, gezeigten Fühlbereich mit der Breite B liegen fünf Windungen des Fadens 7, zwischen denen schmale Abstände herrschen. Daraus ist die Abbildung BF'₈ hergestellt. Der Bildwandler BW wandelt die Abbildung BF'₈ in digitalisierter Form bei jeder Abtastsequenz in eine rechts neben Fig. 5, a, gezeigte Signalkette um (Diagramm Spannung über Zeit). Es ergeben sich fünf deutliche Signale in der Signalkette, vor und hinter denen keine deutlichen Signale vorliegen. Der Zeitpunkt t1 repräsentiert den Beginn des Fadenvorrats 8 in Abtastrichtung, die Zeitspanne tx entspricht der Größe des Fadenvorrates bzw. der Anzahl der Windungen, der Zeitpunkt t2 repräsentiert das Ende des Fadenvorrats. Diese Signale t1, tx, t2 sind wie auch die absoluten Signalwerte in der Signalkette repräsentativ für die Größe und Lage des Vorrats 8 im Fühlbereich.

In der nächsten oder in einer der nächsten Abtastsequenzen ist der Fadenvorrat 8, Fig. 6, B, auf zwei Windungen verkleinert, und zwar von der rechten (Abzugs-)Seite. Gemäß Fig. 5b ist die Abbildung BF'₈ entsprechend kleiner. Es werden in der Matrix des Bildwandlers BW weniger Pixel von der Abbildung getroffen. Die im Diagramm rechts neben Fig. 5, b, gezeigte Signalkette enthält nur mehr zwei deutliche Signale. Das der Zeitpunkt tw und die Zeitspanne tx1 gegenüber den vorher ermittelten t2, tx differieren, können durch Vergleich (z.B. in einem Mikroprozessor) sowohl die Verringerung der Größe der Abbildung als auch die Richtung der Abnahme ermittelt werden. In Abhängigkeit von dem Ergebnis kann das Aufwickelorgan 4 (Fig. 1) den Vorrat 8 wieder vergrößern. Wächst der Fadenvorrat 8 über eine bestimmte Größe, was durch die fortlaufende Abtastung festgestellt wird, wird der Antrieb 2 (Fig. 1) wieder abgestellt. In der Regel wird dann so verfahren, daß mittels der Abtastung ein kontinuierlicher Antrieb für das Fadenaufwickelorgan 4 eingestellt wird. Eine nicht mehr kompensierbare Verkleinerung oder Vergrößerung der Abbildung BF'₈ während der Abtastung bedeutet eine Störung, z.B. einen Fadenbruch, was zu einer Störungsanzeige oder zu einem Abschaltsignal verarbeitet wird.

Gemäß Fig. 5 c und d und Fig. 6, C, D, wird mittels einer Reihenmatrix R aus Lichtpunktelementen 21 die Geschwindigkeit und die Bewegungsrichtung des den Fühlbereich mit der Breite B quer durchsetzenden Fadens 7 (im Fühlbereich gemäß Fig. 6, C und D) in entsprechende Nutzsignale (Zeitabstand dt und digitale Einsen) gewandelt, aus denen die Fadengeschwindigkeit oder die Länge des abgezogenen bzw. aufgewickelten Fadens ermittelt wird (in Fig. 1 bei der Fühleinrichtung F beim Aufwickelorgan 4). Zusätzlich können die Nutzsignale, die mit einem Mikroprozessor verarbeitet werden, bei zu starken Unregelmäßigkeiten oder bei Ausbleiben zum Erzeugen eines Störungsanzeige- oder Abschaltssignals benutzt werden.

Auch die Überwachung des Fadenvorrates 8 könnte mit der Reihe R der Lichtpunktelemente 21 (Fig. 5c und d) durchgeführt werden. Eine flächige Matrix (Fig. 5a und b) hat allerdings den Vorteil besonders deutlicher und starker Signale und vermeidet Probleme, die sich aus Problemen der ordnungsgemäßen Ausrichtung der optischen Achse des Objektivs J auf die Empfängerfläche 16 bzw. den Bildwandler BW ergeben könnten.

Gemäß Fig. 5, c und d, führt die Abbildung BF' des Fadens 7 bei der Bewegung in aufeinanderfolgenden Abtastzyklen zu einer Signalkette, in der jeweils ein einziges, das Vorliegen der Abbildung BF' repräsentierendes Signal zu unterschiedlichen Zeitpunkten auftritt. Der Zeitunterschied dt wird zur Ermittlung der Bewegungsgeschwindigkeit und der Bewegungsrichtung ausgewertet. Dabei wird auch das ordnungsgemäße Vorhandensein des Fadens 7 festgestellt, weil Flusen oder anderre Fremdkörper leicht erkennbare und deshalb unterscheidbare Signale bewirken.

In Fig. 5, d, ist angedeutet, daß in der Reihe R der Bildpunktelemente 21 nur ein mit A begrenzter Bereich aktiv ist, während die mit D angedeuteten Bereiche deaktiviert sind. Auf diese Weise ist eine Eingrenzung der Abtastung eingestellt. Dies läßt sich auch bei der flächigen Matrix (Fig. 5, a, b) vornehmen. Zur Veränderung der Auflösung der Abtastung könnten in der Reihen- oder der flächigen Matrix aufeinanderfolgend aktive und deaktivierte Lichtpunktelemente 21 eingestellt werden, was zweckmäßigerweise über eine Eingrenzvorrichtung in der Steuerschaltung der Matrix geschieht. Dies bewirkt, z.B., daß in Fig. 6, D, der Fühlbereich nur die Breite B1 hätte, weil die Bereiche D ignoriert werden. Eine Eingrenzung des Fühlbereiches kann aber auch durch die Einstellung der Blenden 17, 19 oder das Objektiv J Abbildungsoptik 18 vorgenommen werden.

In Fig. 7 wird durch den Ringspalt 9 ein Bündel kohärenten Lichtes 22 von einer Laserlichtquelle Q auf die Empfängerfläche 16 gerichtet. Die Abbildung BF' des Fadens 7 wird aufgrund des kohärenten Lichts 22 scharf genug, so daß der Bildwandler BW, auch in Form einer flächigen oder reihenförmigen Matrix zuverlässig auswertet.

Vergleich der Funktionen einer Fühleinrichtung gemäß den Fig. 2 und 3 und einer Fühleinrichtung mit einer Sammellinse ohne exakt begrenzten Fühlbereich:

Voraussetzungen: Faden mit einem Durchmesser von 0,4mm und einer Lichtdämpfung von 30%. Flusenbüschel mit 4mm Durchmesser und einer Lichtdämpfung von 6%. Die Größe der Empfängerfläche 16 ist auf den Durchmesser des Fadens 7 abgestimmt, d.h. die von der Abbildungsoptik 18 hergestellte Abbildung bedeckt die Empfängerfläche 16. Die bekannte Fühleinrichtung überwacht mit der Sammellinse einen Zylinder mit einem Durchmesser von 6mm.

Bei der bekannten Fühleinrichtung hat der Fühlbereich somit eine Fläche von ca. 27mm², wobei die Fläche, die der Faden innerhalb des Fühlbereichs einnimmt, ca. 2,4mm² beträgt. Daraus ergibt sich für den Faden eine Modulation von ca. 2,6%. Das Flusenbüschel repräsentiert eine Fläche von ca. 12mm² bei einer Modulation von ebenfalls 2,6%. Daraus geht hervor, daß das Fadenbüschel die gleiche Lichtmodulation erbringt wie der Faden, obwohl seine Lichtdämpfung nur 1/5 der Lichtdämpfung des Fadens beträgt. Die bekannte Fühleinrichtung erzeugt beim Flusenbüschel im Fühlbereich ein Fehlsignal.

Bei der neuen Fühleinrichtung ist der Fühlbereich auf 0,13mm² eingegrenzt, wobei die Fläche des Fadens im Fühlbereich ebenfalls 0,13mm² beträgt, d.h., der Faden füllt den Fühlbereich aus, seine Abbildung auf der Empfängerfläche bedeckt diese. Die Lichtmodulation des Fadens ist 30%. Ein im Fühlbereich vorliegendes Flusenbüschel wird auf 0,13mm² abgetastet, was zu einer Lichtmodulation von nur 6% führt. Das Fotoelement ist aufgrund des Faktors 5 zwischen den abgetasteten Objekten in der Lage, zwischen dem Faden und dem Flusenbüschel zu unterscheiden und ein Fehlsignal zu unterdrücken.

## Patentansprüche

1. Optoelektronische Fadenfühleinrichtung (F) einer Fadenspeicher- und -liefervorrichtung (1) für den quer zu seiner Längsrichtung durch einen Fühlbereich bewegten Faden (7), dessen Anwesenheit im Fühlbereich festgestellt werden soll,
mit einer Lichtquelle
und einer lichtsensitiven Empfängerfläche (16),
die wenigstens einem bei Durchgang des Fadens (7) durch den Fühlbereich ein Nutzsignai erzeugenden Fotoelement (15) angehört,
und mit einem zwischen der Lichtquelle (L) und der Empfängerfläche (16) angeordneten optischen System,
**dadurch gekennzeichnet**,
daß das optische System eine Abbildungsoptik (A, 18) mit einer fühlbereichsseitig eine vorbestimmte Tiefe (T) des Fühlbereichs begrenzenden Tiefenschärfe und einem zumindest in der Breite (B) eingeschränkten Betrachtungsbereich ist,
der in etwa der Breite des Fadens entspricht,
und daß die Empfängerfläche (16) innerhalb der Scharfabbildungstiefe der Abbildungsoptik (A, 18) angeordnet ist.

2. Fadenfühleinrichtung nach Anspruch 1, **dadurch gekennzeichnet**, daß das Fotoelement (15) einen Digital-Bildwandler (BW) für die scharfe Abbildung auf der Empfängerfläche (16) aufweist.

3. Fadenfühleinrichtung nach Anspruch 1, **dadurch gekennzeichnet**, daß die Fühlbereichsbreite (B) um ein vorbestimmtes Maß größer ist als die Breite des Fadens.

4. Fadenfühleinrichtung nach den Ansprüchen 1 und 2, **dadurch gekennzeichnet**, daß die Empfängerflächenbreite um ein vorbestimmtes Maß größer als die Breite der Abbildung (BF', FB'₈) des Fadens ist.

5. Fadenfühleinrichtung nach einem der Ansprüche 1 bis 4, **dadurch gekennzeichnet**, daß bei der Empfängerfläche (16) mehrere Fotoelemente oder lichtsensitive Elemente (21), z.B. Pixel, einer CCD-Detektor-Anordnung zu einer Bildwandlermatrix zusammengesetzt und zu einer sequentiellen Abtastung der Matrix an eine Steuerschaltung angeschlossen sind.

6. Fadenfühleinrichtung nach einem der Ansprüche 1 bis 5, **dadurch gekennzeichnet**, daß der Bildwandler (BW) wenigstens ein fotoelektrisches Lichtpunktelement (21), bzw. Pixel, enthält, und daß die quer zum Faden (7) gesehene Dimension des bzw. der Lichtpunktelemente (21) annähernd der Dimension der Abbildung (BF', BF'₈) in dieser Richtung entspricht.

7. Fadenfühleinrichtung nach Anspruch 6, **dadurch** **gekennzeichnet**, daß der Bildwandler (BW) eine reihenförmige oder eine flächige Matrix aus einzeln oder sequentiell abtastbaren Lichtpunktelementen (21), bzw. Pixeln, aufweist.

8. Fadenfühleinrichtung nach Anspruch 7, **dadurch gekennzeichnet**, daß die Matrix in Abtastrichtung eine größere Dimension aufweist als die Abbildung (BF', BF'₈).

9. Fadenfühleinrichtung nach den Ansprüchen 5 und 7, **dadurch gekennzeichnet**, daß die Steuerschaltung des Bildwandlers (BW) eine Eingrenzvorrichtung enthält, mit der wahlweise wenigstens einzelne Lichtpunktelemente, bzw. Pixel, deaktivierbar sind.

10. Fadenfühleinrichtung nach einem der Ansprüche 1 bis 8, **dadurch gekennzeichnet**, daß mit dem Bildwandler (BW) aus der Abbildung (BF', BF'₈) die Lage einer Abbildungsgrenze innerhalb der Empfängerfläche feststellbar und ein zusätzlich die Lage der Abbildung auf der Empfängerfläche repräsentierendes Nutzsignal erzeugbar ist.

11. Fadenfühleinrichtung nach einem der Ansprüche 1 bis 9, **dadurch gekennzeichnet**, daß mit dem Bildwandler in sequentieller Abtastung Bewegungen der Abbildungsgrenzen über die Empfängerfläche feststellbar und in die jeweilige Bewegungsgeschwindigkeit repräsentierende Nutzsignale umwandelbar sind.

12. Fadenfühleinrichtung nach einem der Ansprüche 1 bis 11, **dadurch gekennzeichnet**, daß die Abbildungsoptik (A) ein Objektiv (J), vorzugsweise mit einer Sammellinse (11, 18), enthält.

13. Fadenfühleinrichtung nach Anspruch 12, **dadurch gekennzeichnet**, daß im Objektiv (J) wenigstens eine Blende (17, 19) bzw. Blendenöffnung angeordnet ist.

14. Fadenfühleinrichtung nach Anspruch 12, **dadurch gekennzeichnet**, daß das Objektiv (J) eine Linsenkombination aus mehreren Linsen mit wenigstens einer Sammellinse (11) enthält.

15. Fadenfühleinrichtung nach den Ansprüchen 12 bis 14, **dadurch gekennzeichnet**, daß die Sammellinse (11, 18) eine plankonvexe-, eine bikonvexe- oder eine Meniskuslinse ist.

16. Fadenfühleinrichtung nach den Ansprüchen 12 bis 15, **dadurch gekennzeichnet**, daß das Objektiv (J) zur Veränderung der Tiefenschärfe, der Grenzen des Fühlbereiches und/oder der Abbildungsgröße verstellbar ist.

17. Fadenfühleinrichtung nach den Ansprüchen 1 bis 11, **dadurch gekennzeichnet**, daß die Abbildungsoptik (A) eine Spiegelvorrichtung enthält.

18. Fadenfühleinrichtung nach den Ansprüchen 1 bis 11, **dadurch gekennzeichnet**, daß die Abbildungsoptik (A) wenigstens eine Blendenöffnung (17, 19) im Strahlenweg aufweist, deren Durchmesser kleiner als die Breite des Fühlbereichs ist.

19. Fadenfühleinrichtung nach einem der Ansprüche 1 bis 18, **dadurch gekennzeichnet**, daß die Blende (17, 19) verstellbar oder gegen eine andere Blende mit anderer Öffnungsgröße austauschbar ist.

20. Fadenfühleinrichtung nach einem der Ansprüche 1 bis 19, **dadurch gekennzeichnet**, daß der Fühlbereich die Form eines Ringspaltteils (9) hat.

21. Fadenfühleinrichtung nach Anspruch 20, **dadurch gekennzeichnet**, daß der Ringspaltteil (9) zwischen einer Speicherfläche (3) und einem außenliegenden Ring (5) einer Faden-Meßvorrichtung der Fadenspeicher- und -liefervorrichtung (1) vorgesehen ist, und daß die Fadenfühleinrichtung (F) im Ring (5) angeordnet ist.

22. Fadenfühleinrichtung nach einem der Ansprüche 1 bis 21, **dadurch gekennzeichnet**, daß die Fadenfühleinrichtung (F) zur Überwachung des auf einer Speicherfläche (3) vorhandenen Fadenvorrats (8) der Fadenspeicher- und -liefervorrichtung (1) an der Vorrichtung angebracht und von außen auf die Speicherfläche (3) ausgerichtet ist.

23. Fadenfühleinrichtung nach einem der Ansprüche 1 bis 20, **dadurch gekennzeichnet**, daß die Fadenfühleinrichtung (F) an der mit drehbarem Aufwickelorgan (4) ausgestatteten Fadenspeicher- und -liefervorrichtung (1) relativ zum Aufwickelorgan stationär angeordnet und auf den aus dem Auslaß des Aufwickelorgans (4) austretenden Faden (7) oder auf die erste Fadenwindung auf der Speicherfläche (3) ausgerichtet ist.

24. Fadenfühleinrichtung nach einem der Ansprüche 1 bis 23, **dadurch gekennzeichnet**, daß eine Kohärent-Lichtquelle (Q), z.B. Laserlichtquelle, vorgesehen ist, von der ein Lichtbündel (22) durch den Fühlbereich auf die Empfängerfläche (16) gerichtet ist, um direkt die Abbildung auf der Empfängerfläche (16) herzustellen.

25. Fadenfühleinrichtung nach einem der Ansprüche 1 bis 23, **dadurch gekennzeichnet**, daß der fadenseitige Brennpunkt (F1) des Objektivs (J) bzw. der Sammellinse (11) zwischen dem Objektiv (J) und dem Fühlbereich, maximal im Fühlbereich, liegt.

26. Fadenspeicher- und- liefervorrichtung (1), mit einer optoelektronischen Fadenfühleinrichtung (F) für den quer zu seiner Längsrichtung durch einen Fühlbereich bewegten Faden 7, dessen Anwesenheit im Fühlbereich festgestellt werden soll, mit einer Lichtquelle und einer lichtsensitiven Empfängerfläche (16), die wenigstens einem bei Durchgang des Fadens (7) durch den Fühlbereich ein Nutzsignal erzeugenden Fotoelement (15) angehört, und mit einem zwischen der Lichtquelle (L) und der Empfängerfläche (16) angeordneten optischen System, **dadurch gekennzeichnet**, daß das optische System eine Abbildungsoptik (A, 18) mit einer fühlbereichsseitig eine vorbestimmte Tiefe (T) des Fühlbereichs begrenzenden Tiefenschärfe und einem zumindest in der Breite (B) eingeschränkten Betrachtungsbereich ist, der in etwa der Breite des Fadens entspricht, und daß die Empfängerfläche (16) innerhalb der Scharfabbildungstiefe der Abbildungsoptik (A, 18) angeordnet ist.

## Claims

1. Optoelectronic thread sensing device (F) of a thread storage and delivery device (1) for the thread (7), which is moved transversely to its longitudinal direction through a sensing region and the presence of which in the sensing region is to be detected, having a light source and a light-sensitive receiver surface (16), which belongs to at least one photocell (15) generating an information signal in the course of passage of the thread (7) through the sensing region, and having an optical system disposed between the light source (L) and the receiver surface (16), characterized in that the optical system is an optical imaging system (A, 18) with a depth of field defining a predetermined depth (T) of the sensing region on the sensing-region side and an observation region restricted at least in width (B), which observation region approximately corresponds to the width of the thread, and in that the receiver surface (16) is disposed within the sharp depth of field of the optical imaging system (A, 18).

2. Thread sensing device according to Claim 1, characterized in that the photocell (15) exhibits a digital image converter (BW) for the sharp imaging on the receiver surface (16).

3. Thread sensing device according to Claim 1, characterized in that the sensing-region width (B) is greater, by a predetermined amount, than the width of the thread.

4. Thread sensing device according to Claims 1 and 2, characterized in that the receiver-surface width is greater, by a predetermined amount, than the width of the image (BF', FB'₈) of the thread.

5. Thread sensing devise according to one of Claims 1 to 4, characterized in that at the receiver surface (16) a plurality of photocells or light-sensitive elements (21), e.g. pixels, of a CCD detector arrangement are combined to form an image-converter matrix and are connected to a control circuit for a sequential scanning of the matrix.

6. Thread sensing device according to one of Claims 1 to 5, characterized in that the image converter (BW) includes at least one photoelectric light spot element (21) or pixel, and in that the dimension seen transversely to the thread (7), of the light spot element or light spot elements (21) approximately corresponds to the dimension of the image (BF', BF'₈) in this direction.

7. Thread sensing device according to Claim 6, characterized in that the image converter (BW) exhibits a row-type or an area-type matrix of individually or sequentially scannable light spot elements (21), or pixels.

8. Thread sensing device according to Claim 7, characterized in that the matrix exhibits, in the scanning direction, a larger dimension than the image (BF', BF'₈).

9. Thread sensing device according to Claims 5 and 7, characterized in that the control circuit of the image converter (BW) includes a localization device with which selectively at least individual light spot elements, or pixels can be deactivated.

10. Thread sensing device according to one of Claims 1 to 8, characterized in that the position of an image boundary within the receiver service can be detected and an information signal additionally representing the position of the image on the receiver service can be generated by the image converter (BW) from the image (BF', BF'₈).

11. Thread sensing device according to one of Claims 1 to 9, characterized in that, using the image converter in sequential scanning, movements of the image boundaries over the receiver service can be detected and can be converted into information signals representing the respective speed of movement.

12. Thread sensing device according to one of Claims 1 to 11, characterized in that the optical imaging system (A) includes an objective (J), preferably with a condenser lens (11, 18).

13. Thread sensing device according to Claim 12, characterized in that at least one diaphragm (17, 19) or diaphragm aperture is disposed in the objective (J).

14. Thread sensing device according to Claim 12, characterized in that the objective (J) includes a lens combination of a plurality of lenses with at least one condenser lens (11).

15. Thread sensing device according to Claims 12 to 14, characterized in that the condenser lens (11, 18) is a planoconvex lens, a biconvex lens or a meniscus lens.

16. Thread sensing device according to Claims 12 to 15, characterized in that the objective (J) is displaceable to alter the depth of field, the boundaries of the sensing region and/or magnification.

17. Thread sensing device according to Claims 1 to 11, characterized in that the optical imaging system (A) includes a mirror device.

18. Thread sensing device according to Claims 1 to 11, characterized in that the optical imaging system (A) exhibits at least one diaphragm aperture (17, 19) in the beam path, the diameter of which diaphragm aperture is smaller than the width of the sensing region.

19. Thread sensing device according to one of Claims 1 to 18, characterized in that the diaphragm (17, 19) is displaceable or exchangeable for another diaphragm with a different aperture size.

20. Thread sensing device according to one of Claims 1 to 19, characterized in that the sensing region has the form of a ring-gap part (9).

21. Thread sensing device according to Claim 20, characterized in that the ring-gap part (9) is provided between a storage surface (3) and an externally situated ring (5) of a thread measuring device of the thread storage and delivery device (1), and in that the thread sensing device (F) is disposed in the ring (5).

22. Thread sensing device according to one of Claims 1 to 21, characterized in that the thread sensing device (F) is fitted, to monitor the thread supply (8), present on a storage surface (3), of the thread storage and delivery device (1), to that device and is aligned from outside on to the storage surface (3).

23. Thread sensing device according to one of Claims 1 to 20, characterized in that the thread sensing device (F) is disposed on the thread storage and delivery device (1) equipped with a rotatable take-up component (4), so as to be stationary relative to the take-up component and is aligned onto the thread (7) emerging from the exit of the take-up component (4) or onto the first thread winding on the storage surface (3).

24. Thread sensing device according to one of Claims 1 to 23, characterized in that a coherent light source (Q) e.g. laser light source, is provided, from which a light beam (22) is directed through the sensing region onto the receiver surface (16), in order directly to produce the image on the receiver surface (16).

25. Thread sensing device according to one of Claims 1 to 23, characterized in that the thread-side focal point (F1) of the objective (J) or of the condenser lens (11) lies between the objective (J) and the sensing region, maximally in the sensing region.

26. Thread storage and delivery device (1), having an optoelectronic thread sensing device (F) for the thread (7), which is moved transversely to its longitudinal direction through a sensing region and the presence of which in the sensing region is to be detected, having a light source and a light-sensitive receiver surface (16), which belongs to at least one photocell (15) generating an information signal in the course of passage of the thread (7) through the sensing region, and having an optical system disposed between the light source (L) and the receiver surface (16), characterized in that the optical system is an optical imaging system (A, 18) with a depth of field defining a predetermined depth (T) of the sensing region on the sensing-region side and an observation region restricted at least in width (B), which observation region approximately corresponds to the width of the thread, and in that the receiver surface (16) is disposed within the sharp depth of field of the optical imaging system (A, 18).

## Revendications

1. Agencement optoélectronique (F) de détection de fil, d'un dispositif (1) d'accumulation et d'amenée de fil, pour le fil (7), déplacé dans une zone de détection transversalement à sa direction longitudinale, dont la présence doit être déterminée dans la zone de détection,
comprenant une source lumineuse,
et une surface de réception (16) sensible à la lumière,
qui fait partie au moins d'un élément photosensible (15) engendrant un signal utile lorsque le fil (7) traverse la zone de détection,
et comprenant un système optique disposé entre la source lumineuse (L) et la surface de réception (16)
caractérisé en ce que
le système optique est une optique d'image (A, 18) dont la profondeur de champ limite du côté de la zone de détection une profondeur prédéterminée (T) de la zone de détection et dont la zone d'observation est limitée au moins dans la largeur (B),
qui correspond à peu près à la largeur du fil,
et en ce que la surface de réception (16) est disposée à l'intérieur de la profondeur de champ de l'optique d'image (A, 18).

2. Agencement de détection de fil selon la revendication 1, caractérisé en ce que l'élément photosensible (15) présente un transformateur de numérisation d'image pour la netteté d'image sur la surface de réception (16).

3. Agencement de détection de fil selon la revendication 1, caractérisée en ce que la largeur (B) de la zone de détection est supérieure d'une valeur prédéterminée à la largeur du fil.

4. Agencement de détection de fil selon les revendications 1 et 2, caractérisé en ce que la largeur de la surface de réception est supérieure d'une valeur prédéterminée à la largeur de l'image (BF', FB'₈) du fil.

5. Agencement de détection de fil selon l'une des revendications 1 à 4, caractérisé en ce que, à la surface de réception (16), plusieurs éléments photosensibles ou éléments sensibles à la lumière (21), par exemple des pixels, d'un dispositif détecteur à dispositifs de transfert de charge, ou CCD, sont assemblés en une matrice de transformation d'image et sont raccordés à un circuit de commande en vue d'une exploration séquentielle de la matrice.

6. Agencement de détection de fil selon l'une des revendications 1 à 5, caractérisé en ce que le transformateur d'image (BW) contient au moins un élément ponctuel lumineux photo-électrique (21), ou pixel, et en ce que la dimension des éléments ponctuels lumineux (21), vue transversalement au fil (7), correspond à peu près à la dimension de l'image (BF' BF'₈) dans cette direction.

7. Agencement de détection de fil selon la revendication 6, caractérisé en ce que le transformateur d'image (BW) comprend une matrice unidimensionnelle ou bidimensionnelle composée d'éléments ponctuels lumineux (21), ou pixels, détectables de manière individuelle ou séquentielle.

8. Agencement de détection de fil selon la revendication 7, caractérisé en ce que la dimension de la matrice dans la direction de détection est supérieure à celle de l'image (BF', BF'₈).

9. Agencement de détection de fil selon les revendications 5 et 7, caractérisé en ce que le circuit de commande du transformateur d'image (BW) comprend un dispositif de seuil au moyen duquel au moins des éléments ponctuels lumineux individuels, ou pixels, peuvent au choix être désactivés.

10. Agencement de détection de fil selon l'une des revendications 1 à 8, caractérisé en ce que la position d'une limite d'image à l'intérieur de la surface de réception peut être déterminé à l'aide du transformateur d'image (BW) à partir de l'image (BF', BF'₈), et un signal utile représentant de plus la position de l'image sur la surface de réception peut être engendré.

11. Agencement de détection de fil selon l'une des revendications 1 à 9, caractérisé en ce que des déplacements des limites d'image sur la surface de réception peuvent être déterminés à l'aide du transformateur d'image en étant captés en séquence et peuvent être transformés en signaux utiles représentant les vitesses respectives de déplacement.

12. Agencement de détection de fil selon l'une des revendications 1 à 11, caractérisé en ce que l'optique d'image (A) contient un objectif (J), comprenant de préférence une lentille convergente (11, 18).

13. Agencement de détection de fil selon la revendication 12, caractérisé en ce que au moins un obturateur (17, 19) ou une ouverture de diaphragme est disposé dans l'objectif (J).

14. Agencement de détection de fil selon la revendication 12, caractérisé en ce que l'objectif (J) contient une combinaison de plusieurs lentilles, comprenant au moins une lentille convergente (11).

15. Agencement de détection de fil selon l'une des revendications 12 à 14, caractérisé en ce que la lentille convergente (11; 18) est une lentille planconvexe, ou une lentille biconvexe ou une lentille à ménisque.

16. Agencement de détection de fil selon l'une des revendications 12 à 15, caractérisé en ce que l'objectif (J) est réglable en vue de modifier la profondeur de champ, les limites de la zone de détection et/ou la dimension d'image.

17. Agencement de détection de fil selon l'une des revendications 1 à 11, caractérisé en ce que l'optique d'image A contient un dispositif à miroir.

18. Agencement de détection de fil selon l'une des revendications 1 à 11, caractérisé en ce que l'optique d'image (A) contient au moins, dans le trajet des rayons, une ouverture de diaphragme (17, 19) dont le diamètre est plus petit que la largeur de la zone de détection.

19. Agencement de détection de fil selon l'une des revendications 1 à 18, caractérisé en ce que l'obturateur (17, 19) est réglable ou interchangeable ou contre un autre obturateur dont l'ouverture est différente.

20. Agencement de détection de fil selon l'une des revendications 1 à 19, caractérisé en ce que la zone de détection prend la forme d'une partie de fente annulaire (9).

21. Agencement de détection de fil selon la revendication 20, caractérisé en ce que la partie de fente annulaire (9) est prévue entre une surface d'accumulation (3) du dispositif (1) d'accumulation et d'amenée de fil et un anneau (5), situé à l'extérieur, d'un dispositif de mesure de fil de ce dispositif (1) d'accumulation et d'amenée de fil, et en ce que l'agencement de détection de fil (F) est disposé dans l'anneau (5).

22. Agencement de détection de fil selon l'une des revendications 1 à 21, caractérisé en ce que l'agencement de détection de fil (F) est monté sur le dispositif (1) d'accumulation et d'amenée de fil (1), afin de surveiller la réserve de fil (8) présente sur une surface d'accumulation (3) de ce dispositif, et est orienté de l'extérieur sur la surface d'accumulation (3).

23. Agencement de détection de fil selon l'une des revendications 1 à 20, caractérisé en ce que l'agencement de détection de fil (F) est monté sur le dispositif d'accumulation et d'amenée (1) de fil équipé d'un organe rotatif d'enroulement (4), en étant stationnaire par rapport à cet organe d'enroulement, et qu'il est orienté vers le fil (7) sortant de la sortie de l'organe d'enroulement (4) ou vers le premier enroulement de fil de la surface (3) d'accumulation.

24. Agencement de détection de fil selon l'une des revendications 1 à 23, caractérisé en ce qu'il est prévu une source de lumière cohérente (Q), par exemple une source de lumière laser, à partir de laquelle un faisceau lumineux (22) est orienté à travers la zone de détection vers la surface de réception (16) afin de former directement l'image sur la surface de réception (16).

25. Agencement de détection de fil selon l'une des revendications 1 à 23, caractérisé en ce que le foyer (F1) côté fil de l'objectif (J) ou de la lentille convergente (11) est situé entre l'objectif (J) et la zone de détection, au maximum dans la zone de détection.

26. Dispositif (1) d'accumulation et d'amenée de fil (1) comprenant un agencement optoélectronique (F) de détection de fil, d'un dispositif (1) d'accumulation et d'amenée de fil, pour le fil (7), déplacé dans une zone de détection transversalement à sa direction longitudinale, dont la présence doit être déterminée dans la zone de détection, comprenant une source lumineuse, et une surface de réception (16) sensible à la lumière, qui fait partie au moins d'un élément photosensible (15) engendrant un signal utile lorsque le fil (7) traverse la zone de détection, et comprenant un système optique disposé entre la source lumineuse (L) et la surface de réception (16), caractérisé en ce que le système optique est une optique d'image (A, 18) dont la profondeur de champ limite du côté de la zone de détection une profondeur prédéterminée (T) de la zone de détection et dont la zone d'observation est limitée au moins dans la largeur (B), qui correspond à peu près à la largeur du fil, et en ce que la surface de réception (16) est disposée à l'intérieur de la profondeur de champ de l'optique d'image (A, 18).
